# EUROPEAN PATENT APPLICATION

(11) **EP 1 375 580 A1**
(43) Date of publication of application: **02.01.2004**
(21) Application number: 02700631.1
(22) Date of filing: 20.02.2002
(51) Int. Cl.: C08K 5/103, C08L 101/00, C08J 5/18, A01G 9/14, A01G 13/02

(54) **ANTI-CLOUDING AGENT COMPOSITION**

(30) Priority: 01.03.2001 JP 2001056668
(71) Applicant: CLARIANT INTERNATIONAL LTD., 4132 Muttenz (CH)
(72) Inventor: NAGASAWA, Hiroshi, Ogasa-gun, Shizuoka 437-1496 (JP); NAKAMURA, Masaki, Ogasa-gun, Shizuoka 437-1496 (JP); ISHIDA, Masaki, Ogasa-gun, Shizuoka 437-1496 (JP); OHSAWA, Hiroshi, Ogasa-gun, Shizuoka 437-1496 (JP); HOGA, Takuya, c/o Clariant(Japan)K.K.,Bunkyo Green, Bunkyo-ku, Tokyo 113-8662 (JP)
(74) Representative: Mikulecky, Klaus, Dr.
(86) International application number: PCT/JP2002/001485
(87) International publication number: WO 2002/070597

(57) **Abstract**

An anti-clouding agent composition comprising (a) at least one kind of multivalent alcohol esters of higher fatty acid having 10 to 20 carbons, and (b) at least one kind of derivatives of montanic acid wax selected from the group of montanic acid wax-alkylene oxide adduct, multivalent alcohol ester of montanic acid wax-alkylene oxide adduct represented by sorbitan ester of montanic acid wax-ethylene oxide adduct, and multivalent alcohol ester of montanic acid wax is kneaded and incorporated into a synthetic resin film to form a film. Thereby a synthetic resin film for agriculture which is excellent in an anti-clouding property at lower temperature, an initial anti-clouding property and an anti-clouding lasting property, besides excellent in transparency can be obtained.

## Description

### Technical Field

The instant invention relates to an anti-clouding agent composition that is used for a synthetic resin film for agriculture, in details, to an anti-clouding agent composition for a synthetic resin film used as a coverage material for a house for agriculture represented by polyethylene and having a good initial anti-clouding property, anti-clouding property at low temperature and anti-clouding lasting property, which contributes to prevent poor growth of crops that is caused by clouding due to dew formation on an inner surface of the house while growing crops, and further crops' disease such as water pool disease etc. due to falling down of water droplets.

### Background Art

As coverage materials made of a synthetic resin which are used for a forcing culture or controlling culture of crops such as a house for agriculture or a tunnel cultivation (that is, agricultural films), polyvinylchloride, polyethylene, a copolymer of ethylene and vinyl acetate, etc. have so far been used. Since these synthetic resins are usually hydrophobic, water which is evaporated from the ground surface or crops is condensed on the film surface to form minute water droplets. Sticking of these minute water droplets causes clouding of a film to bring poor growth of crops due to a deterioration of solar light transmission rate. In addition, crops' disease is caused such as water pool disease, etc. due to falling down of water droplets which were condensed on the film surface.

In order to prevent these defects, the method which is now used the most is a method wherein a surfactant such as an sorbitan fatty acid ester which is called an anti-clouding agent is formulated and kneaded into a synthetic resin upon molding a synthetic resin product and the film surface is made ready to be wet by bleed-out of this kneaded anti-clouding agent, or a method of applying an anti-clouding agent on a film surface subsequent to film molding without kneading of the anti-clouding agent. The former kneading type is utilized mainly for a short period type of one to two years and the latter application type is utilized for a long period type used for a longer period than that. The application type is described in Japanese Laid-open patent Publication Nos. Sho 60- 96682 and Hei 2-279733, etc. and is necessary to apply by spraying an anti-clouding agent (spray coat) or to apply by roller coating subsequent to spreading an agricultural film. When spraying an anti-clouding agent, there are defects such that as a large amount of coating liquid is consumed, it is wasteful and less economical than the kneading method, besides long working time is required. In addition, application unevenness occurs and no droplet forming effect is damaged. The roller coating method also has the similar defects.

Against this, in the kneading method, an anti-clouding agent may be formulated and kneaded into a raw material resin of film upon film manuf acturing and no coating work is required on-site which is different from a coating method. Therefore, this method has advantages that the formation of film having an anti-clouding property is easy and its execution is convenient. However, on the other hand, a lasting property of anti-clouding performance of the film in the simulated condition to an actual exposure showed only 60 days both at low and ordinary temperature at longest and the lasting property of its performance is not deemed to be long enough as described in Japanese Examined Patent Publication No. Sho 59-35573 and Japanese Laid-open Patent Publication No. Hei 4-272946. The anti-clouding agent used for these kneading types includes esters of higher fatty acids, e . g . stearic acid, and multivalent alcohol, e.g. sorbitan and glycerin (Japanese Examined Patent Publication No. Sho 59-35573), an ester of multivalent alcohol and higher fatty acid, e.g. an ester of higher fatty acid and sorbitan (Japanese Examined Patent Publication No. Sho 38-6572) and its ethylene oxide adduct (Japanese Examined Patent Publication No. Sho 55-9431), fatty acid ester of glycerin (Japanese Examined Patent Publication No. Sho 38-4174), and an ester of polyglycerin and fatty acid (Japanese Examined Patent Publication No. Sho 43-8605) . However, it is difficult for any one of these anti-clouding agents to realize a compatibility of anti-clouding degrees and an anti-clouding lasting property for both an anti-clouding property at low temperature and an initial anti-clouding property. Therefore, there is a problem of a lack of anti-clouding performance at the place where the temperature difference in a day is big or at the area of very low temperature.

In order to solve this problem, polyoxyethylene alkyl amine (Japanese Examined Patent Publication No. Sho 44-15184), its higher fatty acid ester (Japanese Examined Patent Publication No. Sho 62-33256) and the formulated product thereof and a fatty acid ester of multivalent alcohol (Japanese Laid-open Patent Publication No. Sho 48-104638), etc. are proposed as an anti-clouding agent. Although these anti-clouding agents have a good anti-clouding degree and a good anti-clouding lasting property, they were not able to be provided for a practical use because of a serious deterioration of transparency of a film which was caused by blooming phenomenon on a film surface. And also as the improving methods for realization of a compatibility of anti-clouding degrees and an anti-clouding lasting property for both an anti-clouding property at low temperature and an initial anti-clouding property, and besides a prevention of losing transparency, a mixing formulation with one kind selected from the group of a higher fatty acid ester with bis(polyethoxy)alkyl amine, a linear or branched chain fatty acid with carbon numbers of 12 to 60, a hydroxy fatty acid, etc. (Japanese Laid-open Patent Publication No. 2000-7828), and so on are proposed. However the effects thereof were hard to be substantial. Further, in Japanese Laid-open Patent Publication No. Hei 11-335486, a composition comprising a mixture of one kind selected from the group of ethylene oxide (EO) adduct of fatty acid ester with sorbitol etc. and fatty acid ester with multivalent alcohol-EO adduct, and one kind selected from the group of fatty acid ester of pentaerythritol, propylene oxide (PO) adduct of sorbitan, etc. , and fatty acid multivalent ester of sorbitan, which are excellent in an initial anti-clouding property and an anti-clouding lasting property, is disclosed, however there is no description on an anti-clouding property at low temperature.

Furthermore, in Japanese Laid-open Patent Publication No. Hei 10-310706, there is described to be able to obtain the synthetic resin film for agriculture which can attain anti-clouding and anti-fogging effects lasting for the comparable period of time as or longer than that obtained by the coating method even by a method of kneading an anti-clouding agent and an anti-fogging agent in advance when using a particular higher fatty acid ester containing montan waxes as an anti-clouding agent together with a fluorine-containing surfactant as an anti-fogging agent. However, there is neither description of effect in the case that an anti-clouding agent is used singly, nor description that providing a high anti-clouding effect which lasts for a long period from the initial stage and an anti-clouding lasting property, and besides an anti-clouding property at low temperature.

Therefore, an object of the instant invention is to provide an anti-clouding agent composition for agricultural synthetic resin film that can produce the agricultural synthetic resin film having an excellent anti-clouding performance provided by a resin kneading method, particularly an anti-clouding property at low temperature, an initial anti-clouding property, and an anti-clouding lasting property which are all good and an excellent transparent property and an agricultural synthetic resin film using the same.

### Disclosure of the Invention

As a result of eager study and examination, the present inventors found that the above described problems can be solved by the particular combination of (a) multivalent alcohol ester of C₁₀₋₂₀ higher fatty acid represented by glycerin monostearate, and (b) derivative of higher fatty acid mainly comprising C₂₄₋₃₄ fatty acid such as montanic acid wax etc. (hereinafter referred as to "montanic acid wax" ) and reached to the instant invention.

It means that the instant invention relates to an anti-clouding agent composition for a synthetic resin film for agriculture comprising (a) at least one kind of multivalent alcohol esters of C₁₀₋₂₀ fatty acid and (b) at least one kind of montanic acid wax derivatives selected from the group consisting of (b1) alkylene oxide adduct of multivalent alcohol ester of montanic acid wax, (b2) alkylene oxide adduct of montanic acid wax, and (b3) multivalent alcohol ester of montanic acid wax.

### Detailed Explanation of the Invention

In the anti-clouding agent composition of the instant invention, the multivalent alcohol ester of C₁₀₋₂₀ higher fatty acid used as component (a) includes esters of alkylene glycol such as ethylene glycol, propylene glycol and butylene glycol; glycerin; trimethylol propane; pentaerythritol; sorbitol; etc. and C₁₀₋₂₀ higher fatty acid such as lauric acid, palmitic acid, stearic acid, oleic acid, etc. These esters can be either monoester or diester or triester, or the like, and monoester is preferable. Among multivalent alcohol esters of C₁₀₋₂₀ higher fatty acid, glycerin ester or sorbitan ester is preferable. As a C₁₀₋₂₀ higher fatty acid, stearic acid is preferable. If the preferable compounds are raised concretely, glycerin monostearate (stearic monoglyceride), sorbitan monostearate (stearic monosorbitide) , etc. can be raised, for example, however glycerin monostearate is more preferable. The glycerin ester of C₁₀₋₂₀ higher f atty acid can be used as two or more kinds in combination, if necessary or can be used together with the multivalent alcohol ester of C₁₀₋₂₀ higher fatty acid. The examples of a preferable combination include glycerin esters of C₁₀₋₂₀ higher f atty acid and sorbitan ester of C₁₀₋₂₀ higher fatty acid, for example, more concretely a combination of glycerin monostearate and sorbitan monostearate can be raised.

The amount of component (a) formulated is preferably 0 . 5 to 3 parts by weight relative to 100 parts by weight of a formulated synthetic resin, more preferably 1.0 to 2.0 parts by weight.

On the other hand, a fatty acid in components (b1), (b2) and (b3) used as component (b) in the instant invention needs to be montanic acid wax comprising mainly higher fatty acid having 24 to 34 carbon atoms. A montanic acid wax is a naturally made mineral wax which is usually extracted and refined from brown coal and has the longest chain length among higher fatty acids manufactured industrially. The reason why the carbon numbers of fatty acid are made 24 to 34 in the instant invention is that lasting of an anti-clouding property in long period cannot be realized if a fatty acid mainly comprises a fatty acid of carbon numbers of 22 or less, and that a higher fatty acid of carbon numbers of 34 or more is difficult to obtain industrially. And also esters of a montanic acid wax (hereinafter referred as to "montanic acid wax esters" ) are not limited with monoester and can be multivalent esters such as diester, triester, etc.

The effect such as an anti-clouding lasting property is confirmed when added molar numbers of alkylene oxide in an alkylene oxide adduct of component (b1) or (b2) are in the range of 5 to 200 moles. And the effect is slightly higher when the added molar numbers of alkylene oxide are larger. In addition, it is needless to say, but molar numbers of an alkylene oxide adduct can be less than 5 or more than 200.

The amount of component (b1), (b2) or (b3) formulated is preferably 0.5 to 2.0 parts by weight in a total amount of component (b) relative to 100 parts by weight of a formulated synthetic resin even if any of components (b1), (b2) and (b3) is used, more preferably 0.5 to 1.5 parts by weight. It means that component (b) can be either one kind of (b1) to (b3) components or, for example, a combination use of components (b1) to (b3) such as a combination use of one kind of (b1) component and one kind of (b2) component, and so on. Further there may be used in the same time two or more kinds in one component of the components (b1) to (b3) such as use of two or more kinds in (b1) component in the same time. When two or more of montanic acid wax derivatives are used in the same time, the amount thereof formulated in the synthetic resin is preferably 0.5 to 2.0 parts by weight as a total amount of (b) component relative to 100 parts by weight of a synthetic resin formulated, more preferably 0.5 to 1.5 parts by weight.

The following compounds represented by the general formulae (1) to (5) are raised favorably as alkylene oxide adduct of multivalent alcohol ester of montanic acid wax of (b1), alkylene oxide adduct of montanic acid wax of (b2) and multivalent alcohol ester of montanic acid wax of (b3). General formulae:

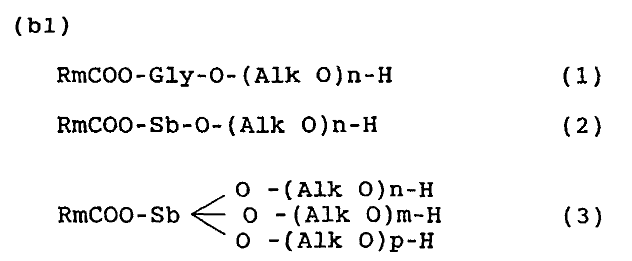

(b2) RmCOO-(Alk O)n-H (4)

(b3) RmCOO-R (5)

[In the general formulae (1) to (5), Rm represents a C₂₃₋₃₃ alkyl group, Gly represents a glycerin residue, Sb represents a sorbitan residue, Alk represents an alkylene group, R represents a multivalent alcohol residue such as a glycerin residue and a sorbitan residue, and n, m and p represent numbers of from 5 to 300, respectively.]

Favorable compounds as (b1), (b2) and (b3) components include glycerin montanate comprising mainly monoester of montanic acid wax, sorbitan montanate comprising mainly monoester of montanic acid wax, ethylene oxide, propylene oxide or butylene oxide adduct of sorbitan montanate comprising mainly monoester of montanic acid wax, ethylene oxide, propylene oxide or butylene oxide adduct of glycerin montanate comprising mainly monoester of montanic acid wax, and ethylene oxide, propylene oxide or butylene oxide adduct of montanic acid wax. Among these compounds, an ethylene oxide adduct of sorbitan montanate comprising mainly monoester of montanic acid wax, an ethylene oxide adduct of glycerin montanate comprising mainly monoester of montanic acid wax, an ethylene oxide adduct of montanic acid wax, sorbitan montanate and glycerin montanate are preferred.

In the instant invention, in order to exhibit all of an initial anti-clouding property, an anti-clouding property at low temperature and an anti-clouding lasting property, it is necessary to use C₁₀₋₂₀ fatty acid glycerin ester of component (a) and at least one kind selected from the group of an alkylene oxide adduct of multivalent alcohol ester of montanic acid wax, an alkylene oxide adduct of montanic acid wax and a multivalent alcohol esters of montanic acid wax of components (b1), (b2) and (b3) in combination. The effect generation mechanism is not solved, however it is presumed the following one.

It means that an initial anti-clouding property and an anti-clouding property at low temperature are mainly brought by a C₁₀₋₂₀ higher fatty acid multivalent alcohol ester with relatively low molecular weight in component (a). However even if the dosage is increased to 2 %, the migrated component onto a film surface is washed off by condensed water for about 60 days and then no more anti-clouding lasting property exhibits. On the other hand, although a montanic acid wax derivative of (b) component cannot be provided for a practical use singly because of extremely low migration speed. But, if a C₁₀₋₂₀ higher fatty acid glycerin ester such as glycerin monostearate is used in combination, it is assumed that the migration of a montanic acid wax derivative onto a film surface is enhanced and besides, both components remain on the film surface and an anti-clouding lasting property is promoted. Referring to the fact that such effect is observed only when component (a) and at least one kind of components (b1) to (b3) of component (b) are used in the same time, some interaction occurs by both components and then it is assumed that a synergistic anti-clouding effect occurs in the combination of a C₁₀₋₂₀ higher fatty acid glycerin ester and some kind of montanic acid wax derivative (an alkylene oxide adduct of multivalent alcohol ester with montanic acid wax comprising mainly C₂₄₋₃₄, an alkylene oxide adduct of montanic acid wax and a multivalent alcohol ester of montanic acid wax). The synergistic effect thereof shows that the effect with glycerin ester is larger than that with sorbitan ester in comparison among different multivalent esters of component (a). In concrete examples, when comparing with the case of stearic acid which is favorably used as a fatty acid, the synergistic effect of glycerin monostearate is larger than that of sorbitan monostearate. Further the synergistic effect of a directly ethoxylated compound of montanic acid wax is bigger than that of an ethoxylated compound of montanic acid wax ester.

In the anti-clouding agent of the instant invention,a fluorine-containing surfactant usually used for an agricultural coverage material as anti-fogging agent and besides any of anionic, cationic, amphoteric and nonionic compounds may be used. Typical examples of the fluorine-containing surfactant to be used in the instant invention are exemplified below.
(I) Anionic fluorine-containing surfactants
   (1) -COOM type
      RfCOOM
      RfSO₂NR'CH₂COOM
   (2) -OSO₃M type
      RfBNR'YOSO₃M
   (3) -SO₃M type
      RfSO₃M
      RfCH₂O(CH₂)ₙSO₃M
   (4) -OPO(OM)₂ type
      RfBNR'YOPO(OM)₂

   In the above formulae, Rf represents a fluoroalkyl group wherein all or a part of hydrogen atoms in the alkyl moiety are substituted by fluorine atoms, B represents -CO- or -SO₂⁻, R' represents a hydrogen atom or a lower alkyl group, Y represents a C₂₋₆ alkyl group, and M represents a hydrogen atom, -NH₄, an alkali metal or an alkaline earth metal.
(II) Cationic fluorine-containing surfactants
   (1) -NR'R" · HX type
      RfBNHYNR'R" · HX
   (2) -N⁺R'R"R'" · X⁻ type
      RfBNHYN⁺R'R"R"' · X⁻

   In the above formulae, Rf, B, R' and Y are the same as defined hereinbefore, R" and R"' each represents a hydrogen atom or a lower alkyl group, HX represents an acid, and X represents a halogen atom or an acid radical.
(III) Amphoteric fluorine-containing surfactants
   (1) -N⁺(R')₂- -COO' type
      RfBNHYN'(R')₂Y'COO⁻

   In the above formula, Rf, B, Y and R' are the same as defined hereinbefore, and Y' represents a C₁₋₃₀ alkylene group.
(IV) Nonionic fluorine-containing surfactants
   (1) alcohol type
      RfOH
   (2) ether type
      RfYO(Y'O)ₙM

In the above formulae, Rf, Y, Y' and M are the same as defined hereinbefore, and n represents an integer of 1 to 50.

Of the above-exemplified fluorine-containing surfactants, preferable ones are shown below.
(i) RfSO₃K(wherein Rf represents a C₈₋₁₂ perfluoroalkyl group)
   e. g. , Fluorad FC-95 and Fluorad FC-98 (both manufactured by Sumitomo 3M Company)
(ii) RfCONH(CH₂CH₂)ₙN⁺(CH₃)₃ · I⁻
   e.g., Fluorad FC-135 (manufactured by Sumitomo 3M Company)
(iii) RfCONHCH₂CH₂N⁺(CH₃)₂(CH₂CH₂)₄COO⁻
(iv) Rf(CH₂CH₂O)ₙH (wherein n = 5 to 50)
   e.g. , Fluorad FC-170C (manufactured by Sumitomo 3M Company) and Fluowet OTN (manufactured by Clariant Company)

These fluorine-containing surfactants are incorporated preferably in an amount of 0.05 to 2 parts by weight relative to 100 parts by weight of the synthetic resin, more preferably 0.1 to 0.5 part by weight. If the amount is less than 0.05 part by weight, there can result in insufficient anti-fogging effect whereas, if more than 2 parts by weight, there may be the case that whitened films or bleed-out phenomenon leading to sticky surface to which dusts are liable to adhere is observed. The fluorine-containing surfactants may be used alone or in a mixture of two or more kinds.

As the resin for the synthetic resin film for agriculture suitably used for the agricultural coverage material of the instant invention, any of those that have conventionally been used for such use may be used. As typical examples, there are illustrated vinyl chloride type resins such as polyvinyl chloride; ethylenic resins such as polyethylene and ethylene/vinyl acetate copolymer; and propylene resins. Of these, vinyl chloride type resins and ethylenic resins are preferred. However, the synthetic resins to be used in the instant invention are not limited to these resins.

In the synthetic resin film for agriculture of the instant invention may be incorporated various additives for resin usually used such as a lubricant, an antistatic agent, a weatherproof-improving agent (an ultraviolet ray absorbing agent, a hindered amine type light stabilizer, etc.), a plasticizer, an antioxidant (including a heat stabilizer), a dye and a pigment in amounts usually employed. The effects of the instant invention are neither spoiled by them, nor are damaged respective functions of the various resin additives.

The synthetic resin film of the instant invention may be produced according to known processes such as an extrusion process (a T-die extrusion process, an inflation molding process, etc.), a calendar roller molding process, etc. The film thickness is adjusted preferably to 50 to 300 µm.

### Brief Explanation of Figures

Fig.-1 represents a front view of a house for testing to experiment on an anti-clouding lasting property of a film sample.
Fig.-2 represents a side view of a house for testing to experiment on an anti-clouding lasting property of a film sample.

### Examples

The instant invention will now be described more specifically by reference to Examples which, however, are not to be construed to limit the instant invention as far as its gist is not changed.

### Example 1

100 g of powdery product of low density polyethylene (LDPE) (MFI=2 , film grade), 1. 0 g of glycerin monostearate, 0 . 5 g of sorbitan monostearate and 1.0 g of monoester of montanic acid wax with glycerin (hereinafter referred as to "glycerin monomontanate") were charged to a beaker. This mixture was kneaded by two roll mill at 120° C for 5 minutes. The kneaded sample was put in iron plates inserting 100 µm of spacers and was heat-pressed at 160°C for 3 minutes. This was cut to a dimension of 5 cm X 10 cm to prepare a film sample for testing. Using this film sample, an anti-clouding lasting property, an anti-clouding property at low temperature and an initial anti-clouding property of the film sample were evaluated applying a house for testing of Fig.-1. The results were shown in Table 1.

### (An anti-clouding lasting property)

LDPE film of 100 µm in thickness spread on the roof face of a house for testing **1** was cut to make a square hole **3** as in Fig.-1 and the film sample **4** was put to the hole. The whole face of the house for testing was covered by LDPE film of 100 µm in thickness, hot water **8** with temperature controlled at 40° C was introduced into a water bath and installed in the room at the room temperature of 20° C. Then the film sample face was observed at the determined time everyday, whether water droplets were put onto an inner surface or not was inspected and a number of days until clouding was taken place was measured. And also the area ratio was recorded when the film sample got cloudy. In this condition, the inner surface of the film always got wet as the house for testing was closed.

Water temperature control was made by setting the temperature by a controller **5** and, when the temperature went down below the setting temperature, heating water with a heater **6** and stirring with a stirrer **7** to keep the water temperature in a water bath at the setting temperature. The water temperature controlling method was the same in the testing for an anti-clouding property at low temperature and an initial anti-clouding property of below. No. **9** in Fig.-1 shows water face.

### (Test for Anti-clouding property at low temperature and Initial anti-clouding property)

Under the conditions wherein the house **1** for testing on which film samples **4** were spread and the room temperature and the water temperature were controlled at 5°C and 15°C respectively, the sticking situation of water droplets subsequent to being left from right after installation till 36 hours was observed as an initial anti-clouding property and under controlling the room temperature at 5°C and water temperature at 15°C, the sticking situation of water droplets subsequent to being left from 6 hours to one day was observed as an anti-clouding property at low temperature. According to the criteria described below, the sticking situation of water droplets was recorded.
The sticking situation of water droplets
- ⓞ: : no sticking of water droplets was observed and few clouding was observed.
- ⓞ/○: : sticking of water droplets was slightly observed, however few clouding was observed.
- ○: : sticking of water dropletswas slightly observed and clouding was observed.
- Δ: : sticking of big water droplets was observed and clouding was observed.
- X: : sticking of small water droplets was observed in most of area and clouding was observed considerably.

### Examples 2 to 8

The same manners were taken as Example 1 except for replacing the amount of glycerin monostearate, sorbitan monostearate and glycerin monomontanate with the amount of Table 1, respectively. The results were shown in Table 1.

### Comparative Examples 1 to 5

The same manners were taken as Example 1 except for using glycerin monostearate, sorbitan monostearate and glycerin monomontanate singly and replacing its amount with the amount of Table 1, respectively. The results were shown in Table 1.

In following tables, glycerin monostearate is represented by "Gly-St", sorbitan monostearate is represented by "Sb-St" and glycerin monomontanate is represented by "Gly-Mon".

**Table 1**

| | Component (a) | | Component (b) | No. of days without clouding (days) | Initial anti-clouding property | Anti-clouding property at low temperature |
|---|---|---|---|---|---|---|
| | Gly-St | Sb-St | Gly-Mon | | | |
| Example 1 | 1.0 | 0.5 | 1.0 | >90 | ⓞ/○ | ⓞ/○ |
| Example 2 | 1.0 | 0.5 | 0.5 | >90 | ⓞ/○ | ⓞ/○ |
| Example 3 | 1.0 | 0.0 | 1.0 | >90 | ⓞ/○ | ⓞ/○ |
| Example 4 | 1.0 | 0.0 | 0.5 | >90 | ⓞ/○ | ⓞ/○ |
| Example 5 | 0.5 | 1.0 | 1.0 | >90 | ⓞ/○ | ⓞ/○ |
| Example 6 | 0.5 | 1.0 | 0.5 | >90 | ⓞ/○ | ⓞ/○ |
| Example 7 | 0.5 | 0.5 | 1.0 | >90 | ⓞ/○ | ⓞ/○ |
| Example 8 | 0.5 | 0.5 | 0.5 | 70 | ⓞ/○ | ⓞ/○ |
| Comparative Example 1 | 2.0 | 0 | 0 | >70 | ⓞ | ⓞ |
| Comparative Example 2 | 1.0 | 0 | 0 | 14 | ○ | ○ |
| Comparative Example 3 | 0.5 | 0 | 0 | 7 | ○ | ○ |
| Comparative Example 4 | 0 | 1.0 | 0 | 30 | ○ | ○ |
| Comparative Example 5 | 0 | 0 | 1.0 | 0 | X | X |

### Examples 9 to 17

The same manners were taken as Example 1 except for replacing glycerin monomontanate with an ethylene oxide 10 mole adduct of glycerin monomontanate, making the amount of an ethylene oxide 10 mole adduct of glycerin monomontanate, glycerin monostearate and sorbitan monostearate with the amount of Table 2, respectively. The results were shown in Table 2.

### Comparative Examples 6

The same manner was taken as Example 1 except for using an ethylene oxide 10 mole adduct of glycerin monomontanate as an anti-clouding agent singly and making its amount with the amount of Table 2. The results were shown in Table 2.

In following tables, an ethylene oxide 10 mole adduct of glycerin monomontanate is represented by "Gly-Mon-EO(10)".

**Table 2**

| | Component (a) | | Component (b) | No. of days without clouding (days) | Initial anti-clouding property | Anti-clouding property at low temperature |
|---|---|---|---|---|---|---|
| | Gly-St | Sb - St | Gly-Mon-EO(10) | | | |
| Example 9 | 1.0 | 0.5 | 1.0 | >90 | ⓞ/○ | ⓞ/○ |
| Example 10 | 1.0 | 0.5 | 0.5 | >90 | ⓞ/○ | ⓞ/○ |
| Example 11 | 1.0 | 0 | 1.0 | 88 | ○ | ○ |
| Example 12 | 1.0 | 0 | 0.5 | 88 | ○ | ○ |
| Example 13 | 0.5 | 1.0 | 1.0 | >90 | ⓞ/○ | ⓞ/○ |
| Example 14 | 0.5 | 1.0 | 0.5 | >90 | ⓞ/○ | ⓞ/○ |
| Example 15 | 0.5 | 0.5 | 1.0 | >90 | ○ | ○ |
| Example 16 | 0.5 | 0.5 | 0.5 | >90 | ○ | ○ |
| Example 17 | 0 | 1.0 | 1.0 | 62 | ○ | ○ |
| Comparative Example 6 | 0 | 0 | 1.0 | 0 | X | X |

### Examples 18 and 19

The same manners were taken as Example 1 except for replacing glycerin monomontanate with an ethylene oxide 10 mole adduct of montanic acid wax and making the amount of an ethylene oxide 10 mole adduct of montanic acid wax, glycerin monostearate and sorbitan monostearate with the amount of Table 3, respectively. The results were shown in Table 3.

### Comparative Examples 7 and 8

The same manners were taken as Example 1 except for using an ethylene oxide 10 mole adduct of montanic acid wax as an anti-clouding agent and making its amount with the amount of Table 3. The results were shown in Table 3.

In following tables, an ethylene oxide 10 mole adduct of montanic acid wax is represented by "Mon-EO(10)".

**Table 3**

| | Component (a) | | Component (b) | No. of days without clouding (days) | Initial anti-clouding property | Anti-clouding property at low temperature |
|---|---|---|---|---|---|---|
| | Gly-St | Sb-St | Mon-EO(10) | | | |
| Example 18 | 1.0 | 0 | 1.0 | >90 | ○ | ○ |
| Example 19 | 0 | 1.0 | 1.0 | 56 | ○ | ○ |
| Comparative Example 7 | 0 | 0 | 2.0 | 5 | X | X |
| Comparative Example 8 | 0 | 0 | 1.0 | 4 | X | X |

### Examples 20 to 26

The same manners were taken as Example 1 except for replacing glycerin monomontanate with an ethylene oxide 5 mole adduct of monoester of sorbitan with montanic acid wax (hereinafter referred as to "sorbitan monomontanate") and making the amount of an ethylene oxide 5 mole adduct of sorbitan monomontanate, glycerin monostearate and sorbitan monostearate with the amount of Table 4, respectively. The results were shown in Table 4.

In the following tables, an ethylene oxide 5 mole adduct of sorbitan monomontanate is represented by "Sb-Mon-EO(5)".

**Table 4**

| | Component (a) | | Component (b) | No. of days without clouding (days) | Initial anti-clouding property | Anti-clouding property at low temperature |
|---|---|---|---|---|---|---|
| | Gly-St | Sb-St | Sb-Mon-EO(5) | | | |
| Example 20 | 1.0 | 0.5 | 1.0 | >90 | ⓞ/○ | ⓞ/○ |
| Example 21 | 1.0 | 0.5 | 0.5 | 88 | ⓞ/○ | ⓞ/○ |
| Example 22 | 1.0 | 0 | 1.0 | 88 | ○ | ○ |
| Example 23 | 1.0 | 0 | 0.5 | 62 | ○ | ○ |
| Example 24 | 0.5 | 1.0 | 1.0 | >90 | ⓞ/○ | ⓞ/○ |
| Example 25 | 0.5 | 0.5 | 1.0 | 70 | ○ | ○ |
| Example 26 | 0.5 | 0.5 | 0.5 | 70 | ○ | ○ |

### Examples 27 to 44

The same manners were taken as Example 1 except for using glycerin stearate, an ethylene oxide 10 mole adduct of montanic acid wax, an 25 mole adduct thereof , an 50 mole adduct thereof, an 100 mole adduct thereof or an 200 mole adduct thereof as an anti-clouding agent with the amount of Table 5 . The results were shown in Table 5.

In following tables, an ethylene oxide 10 mole adduct of montanic acid wax, an 25 mole adduct thereof, an 50 mole adduct thereof, an 100 mole adduct thereof and an 200 mole adduct thereof are represented by "Mon-EO(10)", "Mon-EO(25)", "Mon-EO(50)", "Mon-EO(100)" and "Mon-EO(200)", respectively.

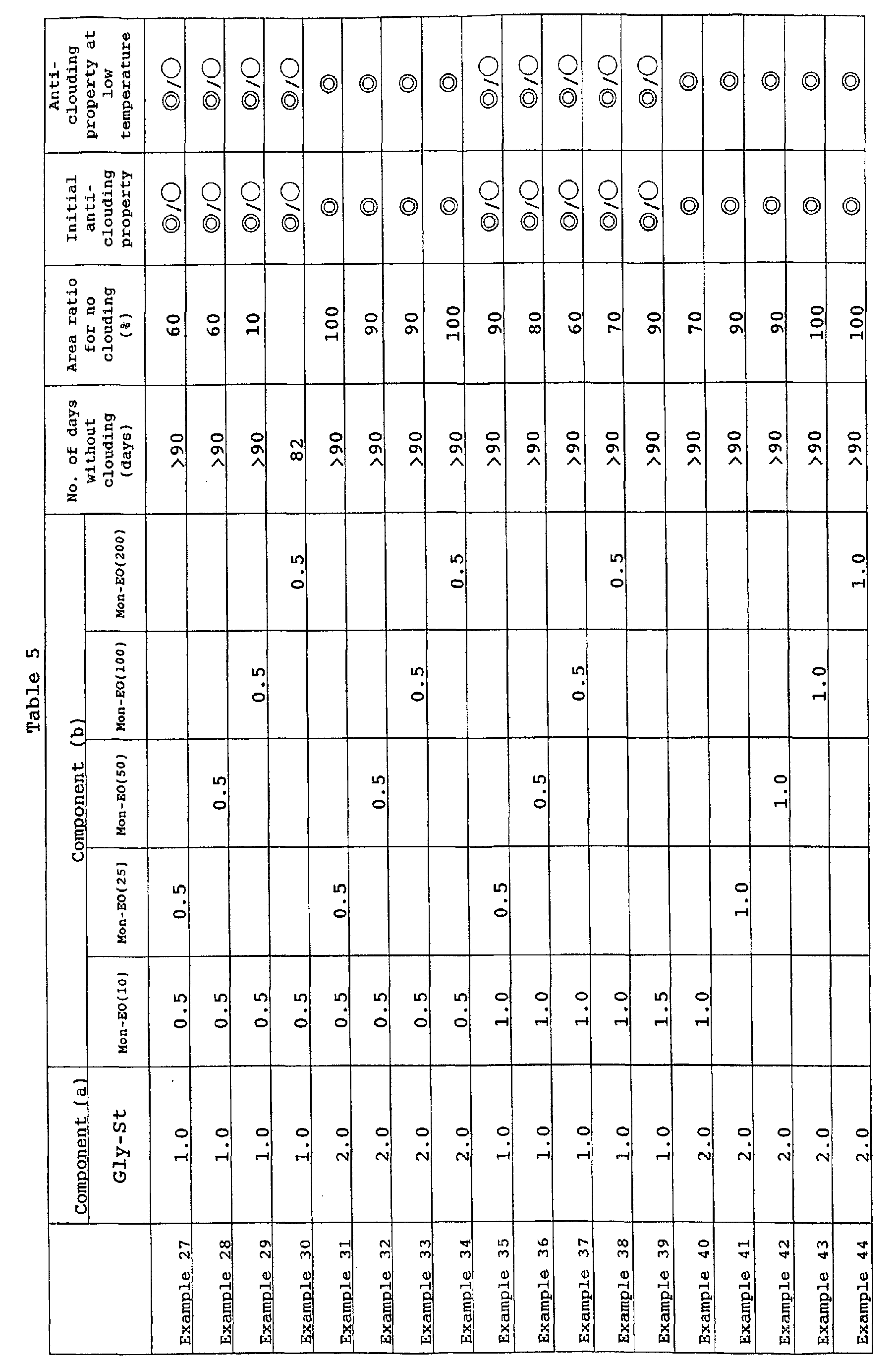

### Comparative Examples 9 to 15

The same manners were taken as Example 1 except for using an ethylene oxide 290 mole adduct of montanic acid wax, an 240 mole adduct thereof, an 200 mole adduct thereof, an 170 mole adduct thereof, sorbitan monomontanate, an ethylene oxide 10 mole adduct of sorbitan monomontanate, or sorbitan monopalmitate as an anti-clouding agent singly, respectively and making its amount with the amount of Table 6. The results were shown in Table 6.

In the following table, an ethylene oxide 290 mole adduct of montanic acid wax is represented by "Mon-EO(290)", an 240 mole adduct thereof is represented by "Mon-EO(240)", an 200 mole adduct thereof is represented by "Mon-EO(200)", an 170 mole adduct thereof is represented by "Mon-EO(170)", sorbitan monomontanate is represented by "Sb-Mon" , an ethylene oxide 10 mole adduct of sorbitan monomontanate is represented by "Sb-Mon-EO(10)", and sorbitan monopalmitate is represented by "Sb-Pal".

**Table 6**

| | Anti-clouding agent | Dosage (%) | No. of days without clouding (days) | Initial anti-clouding property | Anti-clouding property at low temperature |
|---|---|---|---|---|---|
| Comparative Example 9 | Mon-EO( 290 ) | 2.0 | 0 | X | X |
| Comparative Example 10 | Mon-EO(240) | 2.0 | 0 | X | X |
| Comparative Example 11 | Mon-EO(200) | 2.0 | 0 | X | X |
| Comparative Example 12 | Mon-EO(170) | 2.0 | 0 | X | X |
| Comparative Example 13 | Sb-Mon | 1.0 | 0 | X | X |
| Comparative Example 14 | Sb-Mon-EO(10) | 1.0 | 0 | X | X |
| Comparative Example 15 | Sb-Pal | 1.0 | 30 | ○ | ○ |

### Advantageous Effect of the Invention

As mentioned above, by incorporating the anti-clouding agent composition of the instant invention into a synthetic resin film for agriculture by kneading, a synthetic resin film for agriculture having an anti-clouding property at low temperature, an initial anti-clouding property and an anti-clouding lasting property which are all good, and having an excellent transparency can be produced.

### Industrial Applicability

As mentioned above in details, the anti-clouding agent composition of the instant invention can be formulated and kneaded into a synthetic resin on manufacturing a synthetic resin film for coverage of a house for agriculture etc. and thereby the clouding of the synthetic resin film can be prevented favorably.

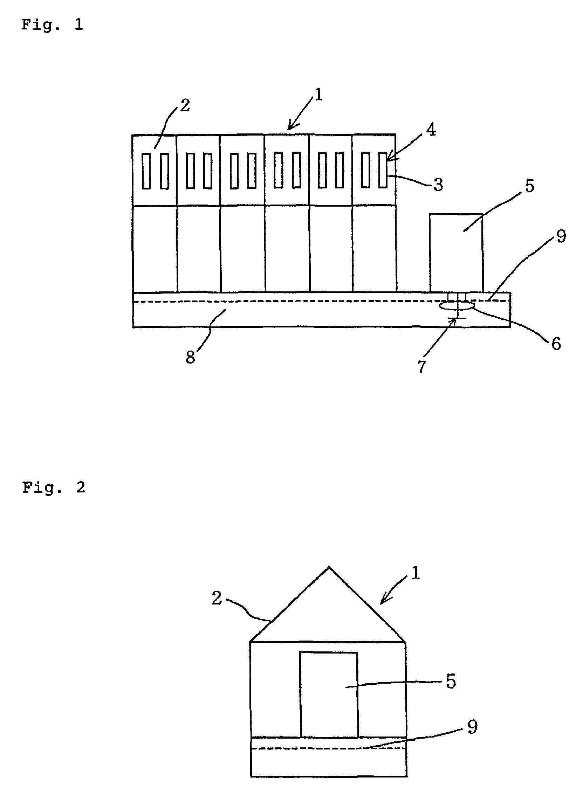

## Claims

1. An anti-clouding agent composition for a synthetic resin film for agriculture comprising:
(a) at least one kind of multivalent alcohol esters of C₁₀₋₂₀ higher fatty acid, and
(b) at least one kind of derivatives of higher fatty acid mainly comprising C₂₄₋₃₄ higher fatty acid (hereinafter referred as to "montanic acid wax") selected from the group of multivalent alcohol ester of montanic acid wax, alkylene oxide adducts of multivalent alcohol esters of montanic acid wax, and alkylene oxide adducts of montanic acid wax.

2. The anti-clouding agent composition according to claim 1, wherein the multivalent alcohol ester of C₁₀₋₂₀ higher fatty acids are esters of C₁₀₋₂₀higher fatty acid and glycerin.

3. The anti-clouding agent composition according to claim 1, wherein the multivalent alcohol esters of C₁₀₋₂₀ higher fatty acid contain glycerin esters of C₁₀₋₂₀ higher fatty acid and sorbitan esters of C₁₀₋₂₀ higher fatty acids.

4. The anti-clouding agent composition according to claim 1 comprising glycerin monostearate and ethylene oxide adducts of montanic acid wax.

5. The anti-clouding agent composition according to claim 1 comprising glycerin monostearate and ethylene oxide adducts of sorbitan or glycerin esters of montanic acid wax.

6. The anti-clouding agent composition according to claim 1 comprising glycerin monostearate and sorbitan or glycerin esters of montanic acid wax.

7. A synthetic resin film for agriculture containing the anti-clouding agent composition described in claim 1.
